# EUROPÄISCHE PATENTSCHRIFT

(11) **EP 0 968 904 B1**
(45) Veröffentlichungstag und Bekanntmachung des Hinweises auf die Patenterteilung: **17.03.2004**
(21) Anmeldenummer: 99111284.8
(22) Anmeldetag: 10.06.1999
(51) Int. Cl.: B62D 21/15, B62D 25/08

(54) **Bodenstruktur für eine selbsttragende Rohbaukarosserie eines Kraftfahrzeugs**
Floor structure of an integral body and frame for an automobile
Structure de plancher d'une carrosserie auto-porteuse d'un véhicule

(30) Priorität: 01.07.1998 DE 19829432
(43) Veröffentlichungstag der Anmeldung: 05.01.2000
(73) Patentinhaber: DaimlerChrysler AG, 70567 Stuttgart (DE)
(72) Erfinder: Gaiser, Ferdinand, 71120 Grafenau (DE)

(56) Entgegenhaltungen:
- US-A- 5 507 522

## Beschreibung

Die Erfindung betrifft eine Bodenstruktur für eine selbsttragende Rohbaukarosserie eines Kraftfahrzeugs, insbesondere eines Personenkraftwagens, mit zwei bis in einen Heckbereich erstreckten Seitenlängsträgern, die über wenigstens zwei zueinander in Fahrzeuglängsrichtung beabstandete Querträger in dem Heckbereich miteinander verbunden sind.

Eine solche Bodenstruktur ist insbesondere für Kombi-Personenkraftwagen (Mercedes-Benz T-Modell) allgemein bekannt. Der Kombi-Personenkraftwagen weist in dem Heckbereich der Bodenstruktur einen Laderaum auf, der mit einer entgegen der normalen Fahrtrichtung ausgerichteten dritten Sitzreihe bestückbar ist. Die Füße von auf dieser dritten Sitzreihe befindlichen Personen sind in einer entsprechenden Vertiefung im Laderaumboden abgestellt. Bei einem Heckaufprall auf den Kombi-Personenkraftwagen treten erhebliche Heckintrusionen auf, die auch die Bodenstruktur stark deformieren. Insbesondere bei einem seitlich versetzten Heckaufprall ergeben sich Deformationen des Heckbereiches der Bodenstruktur, die zu erheblichen Verletzungen von auf der dritten Sitzreihe befindlichen Personen, insbesondere in deren Fußbereichen, führen können.

Aus der US-Patentschrift 5,507,522 ist ein Kraftfahrzeug in Pickup-Bauweise bekannt, das mit einem separaten Tragrahmen versehen ist. Der Tragrahmen weist zwei Seitenlängsträger sowie mehrere, sich zwischen den Seitenlängsträgern erstreckende Querträger auf. Im Heckbereich ist zwischen den Seitenlängsträgern eine Mittellängsstrebe angeordnet, wobei die Mittellängsstrebe und die Querträger insgesamt einteilig ausgeführt sind. An dem Tragrahmen kann ein Karosserieaufbau befestigt werden.

Aufgabe der Erfindung ist es, eine Bodenstruktur der eingangs genannten Art zu schaffen, die bei Heckaufprallbelastungen eine vergrößerte Sicherheit für die Fahrzeuginsassen bietet und die eine flexible Laderaumnutzung ermöglicht.

Diese Aufgabe wird dadurch gelöst, dass sich im Heckbereich zwischen den beiden Querträgern wenigstens eine Mittellängsstrebe erstreckt, die parallel zu den Seitenlängsträgern ausgerichtet, an wenigstens einem Querträger lösbar angeordnet und wenigstens an einem der beiden Querträger um eine horizontale, in Fahrzeugquerrichtung verlaufende Schwenkachse nach oben schwenkbeweglich gelagert ist. Diese Mittellängsstrebe nimmt auch bei einem seitlich versetzten Heckaufprall zusätzlich zu dem belasteten Seitenlängsträger Aufprallenergie auf und kann diese in den anschließenden Querträger weiterleiten, der wiederum die Aufprallenergie auch auf den zweiten Seitenlängsträger weiter überträgt. Durch die Verteilung der Aufprallbelastungen trotz des versetzten und anfänglich nur einen Seitenlängsträger beaufschlagenden Heckaufpralls auf beide Seitenlängsträger werden die Heckintrusionen der Bodenstruktur reduziert. Insbesondere bei Kombi-Personenkraftwagen ergibt sich dadurch eine reduzierte Deformation des Laderaumes, der bei einer vorhandenen dritten Sitzreihe einen ausreichenden Fussraum aufrechterhält. Durch die schwenkbewegliche Lagerung der Mittellängsstrebe ist es möglich, die Zugänglichkeit zu einem unter der Mittellängsstrebe befindlichen Aufnahmeraum, insbesondere für ein Reserverad oder für anderes Ladegut, aufrechtzuerhalten. Vorteilhaft kann die Mittellängsstrebe zudem so ausgestaltet sein, dass sie als Hebelarm zum Anheben und Herausheben des Reserverades aus dem entsprechenden Aufnahmeraum, d.h. aus der Reserveradmulde, dient. Hierzu kann die Mittellängsstrebe mittels entsprechender Halterungen an dem Reserverad angreifen. Zudem kann der Mittellängsstrebe ein Griff zugeordnet sein, der das vereinfachte Anheben der Mittellängsstrebe ermöglicht.

In Ausgestaltung der Erfindung ist die Mittellängsstrebe an ihren Stirnenden mit verbreiterten Abstützflächen versehen, die sich an den beiden Querträgern flächig abstützen. Dadurch wird die Überleitung von Aufprallenergie bei einem Heckaufprall in den nach vorne anschließenden Querträger weiter verbessert.

In weiterer Ausgestaltung der Erfindung ist die Mittellängsstrebe - in Fahrzeuglängsrichtung gesehen - mit geringem Abstand zu wenigstens einem Querträger positioniert. Falls die Mittellängsstrebe zu beiden Querträgern mit geringem Abstand positioniert ist, so ist die Mittellängsstrebe vorteilhaft an einem Bodenblech festgelegt und ist auf gleicher Höhe wie die beiden Längsträger angeordnet. Besonders vorteilhaft ist es, wenn die Mittellängsstrebe lediglich zu dem heckseitigen Querträger mit geringem Abstand positioniert ist, da der verbleibende Spalt dann die elastische Durchbiegung des heckseitigen Querträgers bei Stoßfängerprüfungen ermöglicht, ohne daß die Mittellängsstrebe beaufschlagt wird.

In weiterer Ausgestaltung der Erfindung ist die Mittellängsstrebe in Kombination mit der Anordnung einer dritten Sitzreihe in einem Kombi-Personenkraftwagen als zwischen die Querträger einbindbares Nachrüstteil gestaltet. Dadurch kann die Mittellängsstrebe ohne Änderungen der Rohbaustruktur und damit der Bodenstruktur nachträglich bei Bedarf in Personenkraftwagen montiert werden. Die Bodenstruktur und damit die Rohbaustruktur bleibt somit immer gleich, wobei lediglich bei der Orderung einer dritten Sitzreihe durch den Kunden zusätzlich noch die Mittellängsstrebe mit eingefügt wird.

In der nachfolgenden Beschreibung werden bevorzugte Ausführungsbeispiele der Erfindung beschrieben, die anhand der Zeichnungen dargestellt sind.
- Fig. 1: zeigt schematisch in einer Seitenansicht einen Kombi-Personenkraftwagen mit einer dritten Sitzreihe, der mit einer Ausführungsform einer erfindungsgemäßen Bodenstruktur versehen ist,
- Fig. 2: in einer Draufsicht als Explosionsdarstellung einen Heckbereich einer Ausführungsform einer erfindungsgemäßen Bodenstruktur für einen Kombi-Personenkraftwagen nach Fig. 1,
- Fig. 3: in perspektivischer Explosionsdarstellung den Heckbereich der Bodenstruktur nach Fig. 2,
- Fig. 4: in einer Draufsicht den Heckbereich der Bodenstruktur nach den Fig. 2 und 3 im deformierten und undeformierten Zustand,
- Fig. 5: in perspektivischer Darstellung einen weiteren Heckbereich einer Bodenstruktur ähnlich den Fig. 2 bis 4, und
- Fig. 6: in perspektivischer Darstellung einen weiteren Heckbereich einer Bodenstruktur ähnlich Fig. 5.

Ein Kombi-Personenkraftwagen 1 weist in an sich bekannter Weise (Mercedes-Benz T-Modell) eine selbsttragende Rohbaukarosserie auf, die eine einen Frontsitzbereich 2 sowie einen Fondsitzbereich 3 umfassende Fahrgastzelle aufweist. Die Fahrgastzelle ist zum Heck des Kombi-Personenkraftwagens 1 hin in einen Laderaum 4 verlängert, in dem eine dritte Sitzreihe entgegen normaler Fahrtrichtung positionierbar ist. Auf der dritten Sitzreihe befindliche Personen stellen ihre Beine in einer Vertiefung in einem Laderaumboden des Laderaumes 4 ab, die einen Fußraum 5 bildet.

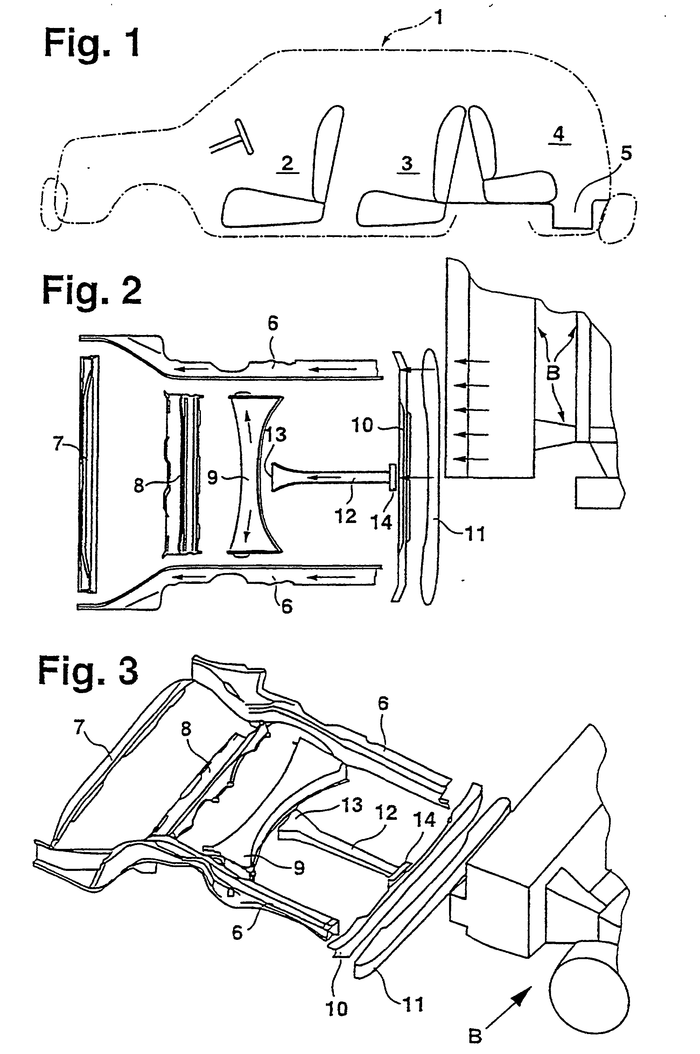

Die Bodenstruktur der selbsttragenden Rohbaukarosserie des Kombi-Personenkraftwagens 1 weist in an sich bekanner Weise einen Vorbaubereich auf. Die Bodenstruktur weist auf Höhe der Fahrgastzelle nicht näher dargestellte Seitenschweller, Längsträger und Querträger auf, die zu einem steifen Verbund miteinander verschweißt sind. Unterhalb des Fondsitzbereiches 3 beginnt ein in den Fig. 2 bis 4 dargestellter Heckbereich der Bodenstruktur, der mit der übrigen Bodenstruktur des Kombi-Personenkraftwagens 1 einstückig verbunden ist. Dieser Heckbereich weist zwei Seitenlängsträger 6 auf, die auf Höhe einer nicht dargestellten Hinterachse in an sich bekannter Weise gekröpft sind. Die Seitenlängsträger 6 sind in an sich bekannter und nicht näher dargestellter Weise bis in einen Schwellerbereich nach vorne fortgeführt und gehen in die Längsträger der Fahrgastzelle über. Unterhalb des Fondsitzbereiches 2 ist ein erster, vorderer Querträger 7 vorgesehen, der sich zwischen den beiden Seitenlängsträgern 6 erstreckt und nachfolgend als Frontsitzquerträger 7 bezeichnet wird. Unterhalb des Fondsitzbereiches 3 im Bereich der Kröpfung der Seitenlängsträger 6 ist ein weiterer Querträger 8 vorgesehen, der als Fondsitzquerträger 8 bezeichnet wird. Oberhalb einer nicht näher dargestellen Hinterachse ist ein dritter Querträger 9 angeordnet, der als Hinterachsquerträger 9 bezeichnet wird. Den heckseitigen Abschluß der Seitenlängsträger 6 bildet ein als Stoßfängerbiegeträger ausgebildeter Querträger 10. Dem Querträger 10 ist in an sich bekannter Weise ein Stoßfänger 11 zugeordnet.

Um bei seitlich versetzten Heckaufprallbelastungen, die durch eine Barriere B simuliert sind, zu vermeiden, daß die entsprechenden Heckaufprallbelastungen zu einer starken Deformation des Heckbereiches der Bodenstruktur und damit zu einer starken Reduzierung der Länge des Laderaumes 4 führen, ist zwischen den beiden Seitenlängsträgern 6 in der Fahrzeugmitte eine zusätzliche Abstützung in Form einer Mittellängsstrebe 12 vorgesehen, die sich parallel zu den Seitenlängsträgern 6 erstreckt und sich einerseits am Hinterachsquerträger 6 und andererseits am Querträger 10 abstützt. Hierzu weist die Mittellängsstrebe 12 einen sich stetig erweiternden Stirnbereich 13 auf, der sich flächig an einer korrespondierenden, rückseitigen Fläche des Hinterachsquerträgers 6 abstützt. Außerdem weist die Mittellängsstrebe 12 einen stufenartig verbreiterten rückseitigen Stirnbereich 14 auf, der sich flächig an einer korrespondierenden Fläche des Querträgers 10 abstützt. Wie insbesondere anhand der Fig. 3 erkennbar ist, befindet sich die Mittellängsstrebe 12 auf gleicher Höhe wie der Hinterachsquerträger 9 und der Querträger 10.

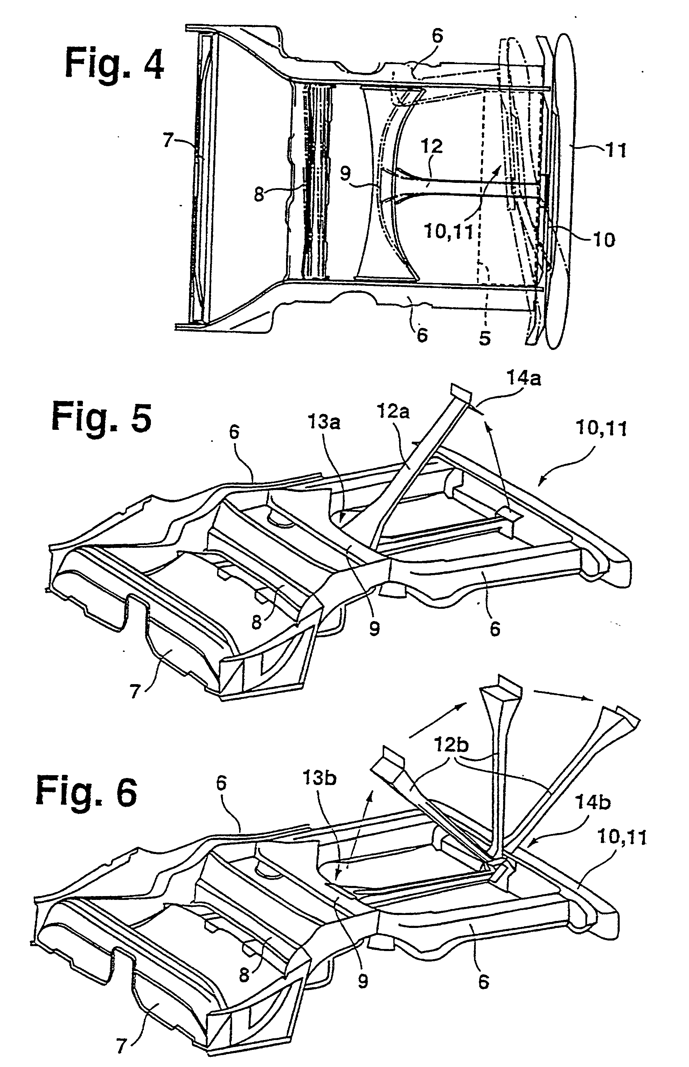

Die zusätzliche Versteifung des Heckbereiches der Bodenstruktur mittels der Mittellängsstrebe 12 führt bei seitlich versetzten Heckaufprallbelastungen, die durch die Barriere B simuliert werden, zu gegenüber Bodenstrukturen ohne zusätzliche Mittellängsstrebe 12 reduzierten Heckintrusionen. In Fig. 4 ist dabei einerseits der undeformierte Ausgangszustand der Stoßfänger 11 und andererseits der durch die Barriere B deformierte Heckbereich der Bodenstruktur erkennbar. In gestrichelter Darstellung ist der Fußraum 5 ersichtlich, wie er im undeformierten Zustand relativ zu dem Heckbereich positioniert ist. Es ist aus Fig. 4 erkennbar, daß der Fußraum 5 auch nach einer Heckdeformation teilweise erhalten bleibt, was bei einem Heckaufprall ohne zusätzliche Versteifung mittels der Mittellängsstrebe 12 nicht der Fall ist. Die Verletzungsgefahren für auf der dritten Sitzreihe befindliche Personen wird durch die Mittellängsstrebe 12 somit reduziert.

Die Heckbereiche der Bodenstrukturen nach den Fig. 5 und 6 entsprechen im wesentlichen der zuvor anhand der Fig. 2 bis 4 beschriebenen Bodenstruktur, wobei für gleiche Bauteile auch die gleichen Bezugszeichen verwendet worden sind. Einziger Unterschied ist es, daß bei den Bodenstrukturen nach den Fig. 5 und 6 die Mittellängsstrebe 5a, 12b jeweils lösbar und schwenkbeweglich an dem Hinterachsquerträger 9 bzw. dem Querträger 10 angeordnet sind.

Beim Ausführungsbeispiel nach Fig. 5 ist die Mittellängsstrebe 12a auf Höhe ihres rückseitigen Stirnbereiches 14a lösbar an dem Querträger 10 angeordnet und zudem an ihrem vorderen Stirnbereich 13a mittels einer nicht näher dargestellten Scharnieranordnung schwenkbeweglich an dem Hinterachsquerträger 9 positioniert. Dadurch ist es möglich, die Mittellängsstrebe 12a in Pfeilrichtung anzuheben und somit um die Anbindung am Hinterachsquerträger 9 zu schwenken.

Beim Ausführungsbeispiel nach Fig. 6 ist die Mittellängsstrebe 12b entsprechend umgekehrt schwenkbeweglich angeordnet. Dabei ist die Mittellängsstrebe 12b mittels ihres vorderen Stirnbereiches 13b am Hinterachsquerträger 9 lösbar angeordnet. Der rückseitige Stirnbereich 14b der Mittellängsstrebe 12b ist mittels einer Scharnieranordnung an dem Querträger 10 derart schwenkbeweglich gelagert, daß die Mittellängsstrebe 12b gemäß den Darstellungen in Fig. 6 in Pfeilrichtung bis über die Stoßfänger 11 hinaus schwenkbar ist. Dies ist insbesondere von Vorteil, falls mit der Mittellängsstrebe 12b ein Reserverad aus dem Laderaumboden herausgehoben werden soll, da für diesen Fall die Mittellängsstrebe 12b als Anhebehilfe dienen kann. Je nachdem, ob das Reserverad unterhalb oder oberhalb der Mittellängsstrebe 12b angeordnet ist, sind der Mittellängsstrebe 12b geeignete Halterungen für das Reserverad zugeordnet, die bei einer Schwenkbewegung der Mittellängsstrebe 12b ein gleichzeitiges Anheben und Verschwenken des Reserverades bewirken.

## Patentansprüche

1. Bodenstruktur für eine selbsttragende Rohbaukarosserie eines Kraftfahrzeugs, insbesondere eines Personenkraftwagens mit zwei bis in einen Heckbereich erstreckten Seitenlängsträgern, die über wenigstens zwei zueinander in Fahrzeuglängsrichtung beabstandete Querträger in dem Heckbereich miteinander verbunden sind,
**dadurch gekennzeichnet, dass**
sich in dem Heckbereich zwischen den beiden Querträgern (9, 10) wenigstens eine Mittellängsstrebe (12, 12a, 12b) erstreckt, die parallel zu den Seitenlängsträgern (6) ausgerichtet ist, wobei die Mittellängsstrebe (12a, 12b) an wenigstens einem Querträger (9, 10) lösbar angeordnet ist und wenigstens an einem der beiden Querträger (10) um eine horizontale, in Fahrzeugquerrichtung verlaufende Schwenkachse nach oben schwenkbeweglich gelagert ist.

2. Bodenstruktur nach Anspruch 1,
**dadurch gekennzeichnet,**
**dass** die Mittellängsstrebe (12, 12a, 12b) an ihren Stirnenden (13, 14; 13a, 14a; 13b, 14b) mit verbreiterten Abstützflächen versehen ist, die sich an den beiden Querträgern (9, 10) flächig abstützen.

3. Bodenstruktur nach wenigstens einem der vorhergehenden Ansprüche,
**dadurch gekennzeichnet,**
**dass** die Mittellängsstrebe - in Fahrzeuglängsrichtung gesehen - mit geringem Abstand zu wenigstens einem Querträger positioniert ist.

4. Bodenstruktur nach wenigstens einem der vorhergehenden Ansprüche,
**dadurch gekennzeichnet,**
**dass** die Mittellängsstrebe (12, 12a, 12b) in Kombination mit der Anordnung einer dritten Sitzreihe in einem Kombipersonenkraftwagen als zwischen die Querträger (9, 10) einbindbares Nachrüstteil gestaltet ist.

## Claims

1. A floor structure for a unitised body-in-white of a motor vehicle, in particular a passenger car with two side members extended into a rear area which are connected together in the rear area by at least two crossmembers spaced a certain distance apart,
**characterised in that**
extending between the two crossmembers (9, 10) in the rear area is at least one central longitudinal strut (12, 12a, 12b) which is aligned in parallel with the side members (6), the central longitudinal strut (12a, 12b) being positioned on at least once crossmember (9, 10) in such a manner that it can be detached and being mounted on at least one of the two crossmembers (10) such that it is able to rotate upwards about an horizontal axis of rotation which runs in the direction of travel.

2. A floor structure in accordance with claim 1,
**characterised in that**
the ends (13, 14' 13a, 14a; 13b, 14b) of the central longitudinal strut (12, 12a, 12b) are provided with spread supporting faces which rest on the two crossmembers (9, 10).

3. A floor structure in accordance with at least one of the preceding claims,
**characterised in that**
when viewed lengthways along the vehicle, the central longitudinal strut is positioned a short distance from at least one crossmember.

4. A floor structure in accordance with at least one of the preceding claims,
**characterised in that**
in combination with the positioning of a third row of seats in an estate car the central longitudinal strut (12, 12a, 12b) is designed as a retrofit part which can be integrated between the crossmembers (9, 10).

## Revendications

1. Structure de plancher d'une caisse brute monocoque d'un véhicule automobile, en particulier un véhicule de tourisme, comprenant deux longerons latéraux qui s'étendent jusque dans une partie arrière et qui sont assemblés l'un à l'autre dans la partie arrière par au moins deux traverses écartées l'une de l'autre dans le sens longitudinal du véhicule,
**caractérisée en ce que**, dans la partie arrière entre les deux traverses (9, 10), s'étend au moins une entretoise longitudinale centrale (12, 12a, 12b) qui est parallèle aux deux longerons latéraux (6), l'entretoise longitudinale centrale (12a, 12b) étant agencée de manière amovible contre au moins une traverse (9, 10) et un axe de pivotement étant logé de manière pivotante vers le haut au niveau d'au moins l'une des deux traverses (10) et s'étendant horizontalement dans le sens transversal du véhicule.

2. Structure de plancher selon la revendication 1, **caractérisée en ce que** l'entretoise longitudinale centrale (12, 12a, 12b), au niveau de ses extrémités frontales (13, 14 ; 13a, 14a ; 13b, 14b), est munie de surfaces d'appui élargies, qui viennent en appui plan contre les deux traverses (9, 10).

3. Structure de plancher selon au moins l'une ces revendications précédentes, **caractérisée en ce que** l'entretoise longitudinale centrale - par référence au sens longitudinal du véhicule - est positionnée à une plus faible distance d'au moins une traverse.

4. Structure de plancher selon au moins l'une des revendications précédentes, **caractérisée en ce que** l'entretoise longitudinale centrale (12, 12a, 12b), en combinaison avec l'agencement d'une troisième rangée de sièges dans un véhicule break, est conçue sous forme de pièce supplémentaire à intégrer entre les traverses (9, 10).
